Europäisches Patentamt

(19) European Patent Office

Office européen des brevets

(11) Numéro de publication: **0 088 031**
A2

## (12) DEMANDE DE BREVET EUROPEEN

(21) Numéro de dépôt: 83420013.1

(22) Date de dépôt: 26.01.83

(51) Int. Cl.³: **H 02 G 1/04**

(30) Priorité: 24.02.82 FR 8203359

(43) Date de publication de la demande:
07.09.83 Bulletin 83/36

(84) Etats contractants désignés:
AT BE DE GB IT SE

(71) Demandeur: Etablissements Dervaux Société
anonyme:
71 rue de Monceau
F-75008 Paris-Seine(FR)

(72) Inventeur: Ribeyre, Pierre
1 rue Jean Giono
F-42100 St-Etienne(FR)

(72) Inventeur: Pevel, Marc
Beau Mât
F-43140 St-Didier-en-Velay(FR)

(74) Mandataire: Perrier, Jean-Pierre et al,
Cabinet GERMAIN & MAUREAU 12 rue de la République
F-42000 St-Etienne(FR)

(54) Console pour la suspension temporaire d'un organe de déroulement pour câbles.

(57) Cette console comporte une face postérieure d'appui (5) et un lien souple (6) apte à ceinturer le poteau (15) et dont l'une des extrémités est engagée dans un mécanisme à cliquet (11), tandis que l'autre extrémité est accrochée en (8) de l'autre côté de la console.

Pour faciliter la pose de cette console sur un poteau (14), elle comprend, d'une part, aux extrémités latérales de sa face d'appui (5), des faces (7) de contact avec le lien souple, d'autre part, deux goujons verticaux amovibles (8-9) dont au moins l'un d'eux (9) constitue organe de guidage du lien souple et axe d'articulation pour une bielle (10) portant à son autre extrémité le mécanisme à cliquet (11) et, de plus, un goujon vertical de guidage (13) formant renvoi pour la partie du lien souple (6) pénétrant dans le mécanisme à cliquet (11).

FIG.3

EP 0 088 031 A2

Console pour la suspension temporaire d'un organe de déroulement pour câbles-

L'invention est relative à une console pour la suspension temporaire d'un organe de déroulement de câble.

Pour mettre en place des câbles,conducteurs ou porteurs,aux extrémités supérieures de poteaux,il est courant
d'avoir recours à des organes de déroulage qui sont accrochés temporairement aux extrémités du poteau.

Pour faciliter la pose des câbles,sans pour autant
communiquer des surcharges dynamiques aux consoles d'accrochage de ces câbles,il est connu d'avoir recours à un
dispositif comprenant une console qui,porteuse de l'organe
de déroulage,par exemple un levier sur lequel une poulie
est montée libre en rotation,est munie de moyens d'accrochage au poteau.Dans une forme de réalisation,ceux-ci sont
constitués par un lien souple,amovible,apte à entourer ce
poteau.Il en est ainsi dans le brevet français 79.05715 où
le lien souple est constitué par une sangle dont l'une des
extrémités est liée à un premier axe vertical disposé d'un
côté de la console et dont l'autre extrémité est engagée
dans un mécanisme de tension à cliquet disposé de l'autre
côté de la console et libre en rotation autour d'un deuxième axe.La tension communiquée à la sangle par le mécanisme
à cliquet applique la console sur le poteau et la fait tenir par adhérence.

Si un tel dispositif donne entière satisfaction lorsque la console est appliquée sur une face parfaitement plane,il n'en est pas de même lorsque la face est bosselée ou
incurvée,comme c'est fréquemment le cas,respectivement dans
les poteaux en béton et dans les poteaux en bois ou métalliques.En effet,en raison de la disposition du mécanisme
à cliquet,la tension du lien souple a tendance,dans ces
circonstances,à faire basculer la console pour rapprocher
le mécanisme à cliquet du point d'accrochage,c'est-à-dire
tend à faire pivoter,vers l'arrière,le côté de la console
porteur de ce mécanisme. Ce pivotement autour du poteau
modifie la position de la console et l'organe qu'elle porte,

organe qui,ainsi,ne se trouve plus dans le plan vertical de la trajectoire de déplacement du câble. La poulie de l'organe de déroulage peut ainsi constituer une source de frottement augmentant la tension nécessaire pour tirer le câble.Pour éviter cela,il est nécessaire de procéder par approches successives en serrant et en desserrant le lien souple et en décalant la console à l'opposé de son sens de pivotement.Ces diverses manipulations sont très malaisées,car réalisées au sommet du poteau.De plus,elles augmentent le temps de pose.

La présente invention a pour but de fournir une console qui remédie à ces inconvénients,puisse être posée en une seule fois sur des poteaux de toutes formes et dimensions sans modification de la position de l'organe de déroulage lors du serrage du lien souple.

Cette console est du type comportant une face postérieure d'appui et un lien souple apte à ceinturer le poteau,dont au moins l'une des extrémités est engagée dans un mécanisme de tension à cliquet supporté par la console, au moins d'un côté de celle-ci,et dont l'autre extrémité est apte à coopérer avec un moyen d'ancrage disposé de l'autre côté.

Selon l'invention,cette console comprend,d'une part, aux extrémités latérales de sa face d'appui,des faces de contact avec le lien souple,d'autre part,deux goujons verticaux amovibles disposés symétriquement de part et d'autre et en arrière de sa face d'appui,goujons dont au moins l'un constitue organe de guidage du lien souple et axe d'articulation pour un ensemble de tension,composé d'une bielle portant,articulé sur elle,le mécanisme à cliquet, alors que l'autre constitue,directement ou non,moyen d'ancrage du lien souple et,de plus,dans sa partie antérieure, au moins un goujon vertical de guidage qui,disposé en avant du goujon constituant axe d'articulation pour la bielle,forme renvoi pour la partie du lien souple pénétrant dans le mécanisme à cliquet et passant entre l'une des faces de contact et le goujon formant axe d'articulation pour la bielle.

Grâce à cet agencement,que le poteau soit de faible section ,cas dans lequel les deux extrémités du lien souple prennent appui sur les faces de contact de la semelle, ou que le poteau soit de grande section,cas dans lequel les deux extrémités du lien souple prennent appui sur les goujons verticaux amovibles,les efforts de réaction s'exerçant des deux côtés de la console ont des directions symétriques par rapport au plan médian vertical de celle-ci et ne tendent plus à la faire pivoter d'un côté par rapport au poteau.

Par ailleurs,l'amovibilité du goujon sur lequel est articulée la bielle portant le mécanisme à cliquet permet de remplacer ce mécanisme pour l'utilisation de la console avec une chaîne.Cette amovibilité permet aussi à l'utilisateur d'utiliser un ensemble de tension comportant le cliquet de son choix.

D'autres caractéristiques et avantages ressortiront de la description qui suit en référence au dessin schématique annexé représentant,à titre d'exemples non limitatifs,plusieurs formes d'exécution de cette console.

Figure 1 est une vue en perspective d'une première forme d'exécution de cette console la montrant avec la bielle décalée pour faire voir le mécanisme de tension à cliquet,

Figures 2,3 et 4 sont des vues en plan par-dessus et à échelle réduite avec coupe partielle montrant cette console,respectivement,au repos,lorsqu'elle est appliquée contre un poteau de petites dimensions et lorsqu'elle est contre un poteau de grandes dimensions,

Figure 5 est une vue en plan par-dessus similaire aux figures 2 à 4,mais montrant une variante de réalisation de cette console,

Figure 6 est une vue de côté en élévation montrant à échelle réduite une succession de poteaux lors de l'installation d'une ligne électrique,

Figure 7 est une vue en perspective montrant une variante de réalisation de cette console,

4

Figure 8 est une vue de côté en élévation avec coupe partielle de la console dans le cas de son utilisation avec une poulie traditionnelle.

D'une façon connue,cette console,désignée de façon générale par 2,comporte à son extrémité antérieure un goujon horizontal amovible 3 destiné à servir d'axe d'articulation et d'organe de liaison avec un organe de déroulage et,en particulier,avec une structure portant une poulie 4. Elle comporte également une face d'appui postérieure 5 et est associée à un lien souple 6,tel qu'une sangle,dont l'une des extrémités est destinée à coopérer avec un mécanisme de tension à cliquet 11,tandis que l'autre extrémité peut coopérer avec un moyen d'ancrage .

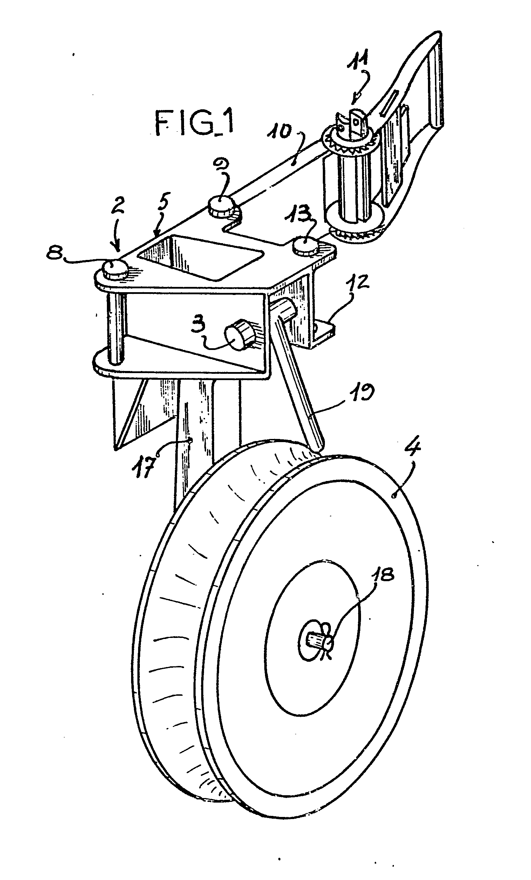

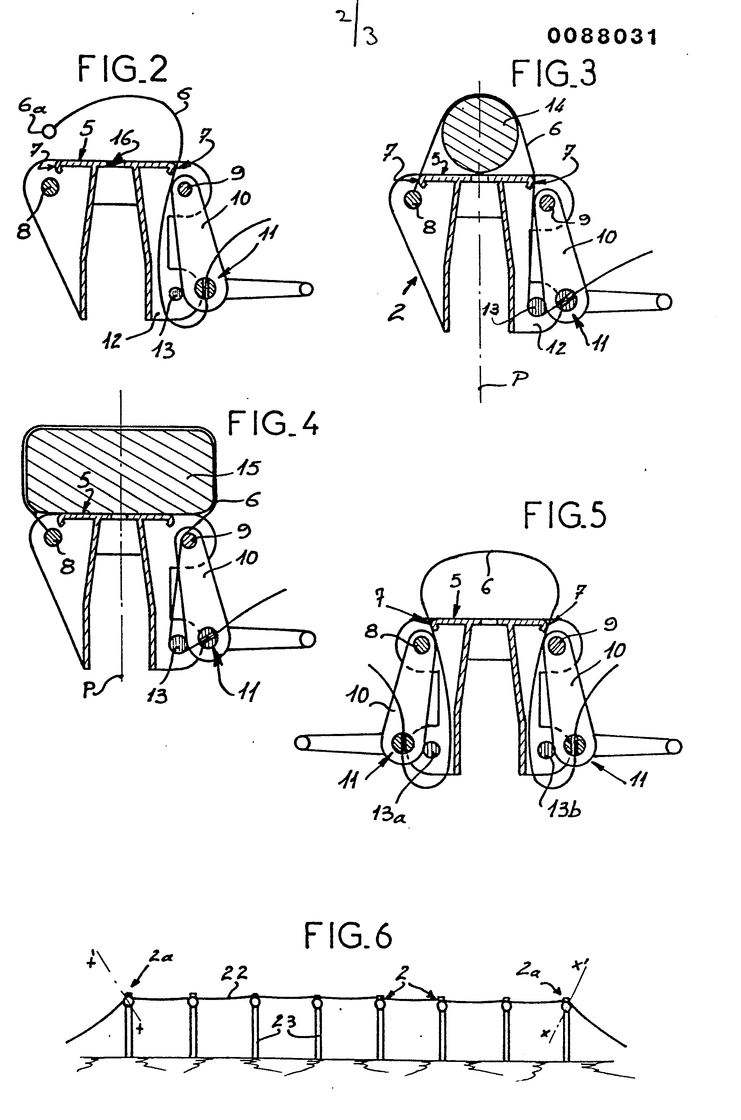

Selon l'invention,la console représentée aux figures 1 à 4 comporte,de part et d'autre de sa face d'appui 5, des faces de contact 7 pouvant coopérer avec le lien souple 6.Elle est également munie,dans sa partie postérieure, de deux goujons verticaux amovibles,respectivement 8 et 9, disposés symétriquement de part et d'autre de cette face d'appui.L'un de ces goujons,et par exemple celui 9,constitue axe d'articulation pour l'extrémité postérieure d'une bielle 10 dont l'extrémité antérieure porte le mécanisme de tension à cliquet 11.La bielle 10 forme un ensemble avec le mécanisme à cliquet 11. Dans sa partie antérieure et sur l'un de ses côtés,la console est munie d'une chape 12 qui est traversée par un goujon vertical amovible 13 disposé en avant du goujon 9. Dans cette forme d'exécution correspondant à une console associée à un mécanisme de tension disposé seulement sur l'un de ses côtés,le lien souple 6 comporte,à l'une de ses extrémités,une boucle 6a qui est traversée par le goujon amovible 8 après que le lien souple ait entouré le poteau comme montré aux figures 3 et 4.L'autre extrémité du lien souple passe entre la face d'appui 7 correspondante et le goujon 9,puis après avoir contourné le goujon 13,est introduite dans le mécanisme 11,comme montré à la figure 2.

Lorsque cette console est appliquée contre un poteau 15

de petites dimensions et faible section et,notamment,un poteau circulaire,comme montré figure 3,l'actionnement du mécanisme à cliquet 11 communique une tension à l'une des extrémités du lien souple et plaque la face d'appui 5 de la console 2 contre le poteau 14.Dans ces conditions,et comme montré à la figure 3,la boucle formée par le lien souple 6 entourant le poteau 14 prend appui sur la console par les faces de contact 7 disposées symétriquement de part et d'autre du plan médian vertical P de la console. Grâce à cela,les efforts de réaction communiqués par le poteau à la console ont des directions qui sont symétriques par rapport au plan P et qui conduisent sur cette console à des composantes s'annulant et ne tendant pas à la faire basculer d'un côté ou de l'autre de ce poteau.

Lorsque la console est appliquée contre un poteau 15 de plus grandes dimensions transversales et de plus grande section,le brin aboutissant au mécanisme d'enroulement prend appui sur le goujon 9,comme montré figure 4.Ainsi, grâce à la disposition relative des deux goujons 8 et 9, les deux brins du lien souple allant du bord antérieur du poteau à la console ont des directions symétriques par rapport au plan P,grâce auxquelles les efforts de réaction conduisent sur la console à des composantes qui s'annulent et qui s'opposent à tout basculement de cette dernière.

Il est à noter que cette répartition symétrique des efforts de réaction est rendue possible par la présence du goujon antérieur 13 qui constitue axe de renvoi et,de manière générale,du lien souple assurant la fixation sur le poteau.

Dans la forme d'exécution représentée à la figure 5, la console 2 se différencie de la précédente par le fait qu'elle comporte deux chapes latérales 12 et deux goujons antérieurs 13a et 13b,ce qui permet,en complément de l'amovibilité des goujons postérieurs 8 et 9,d'une part,de placer la bielle 10 porteuse du mécanisme à cliquet 11, soit à droite,soit à gauche de la console en fonction de la morphologie de l'ouvrier(droitier ou gaucher),soit d'avoir recours à deux mécanismes 11 dont les deux bielles porteuses 10 sont articulées,l'une sur le goujon 9, l'autre sur le goujon 10.Exceptée cette différence constructive,la console est en tout point semblable à celle décrite en référence aux figures 1 à 4.Bien entendu,lorsque la console est associée à deux mécanismes à cliquet 11,la sangle ou le lien souple 6 comporte deux extrémités libres,sans boucle,aptes chacune à coopérer avec l'un de ces mécanismes 11.

Dans toutes les formes d'exécution,la console comporte un alésage 16 traversant sa face d'appui et permettant sa fixation par un organe fileté sur un support quelconque.

Les moyens supportant la poulie 4 sont constitués, dans la forme d'exécution représentée aux figures 1 et 4, par un bras sensiblement vertical 17 dont l'extrémité supérieure est articulée autour du goujon horizontal 3 et dont l'extrémité inférieure porte un axe sensiblement horizontal 18,perpendiculaire au précédent,saillant de l'avant de ce bras et recevant la poulie 4.Cette poulie est associée à un linguet 19 articulé sur l'axe 3 en même temps que le levier 17.

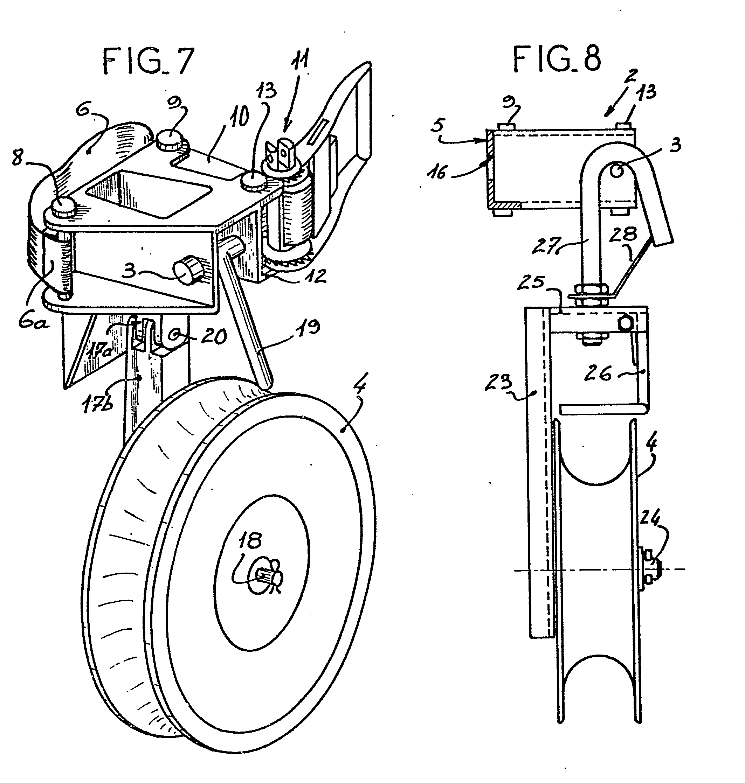

Dans la forme d'exécution représentée à la figure 7, le bras 17 est composé de deux parties,respectivement supérieure 17a et inférieure 17b,reliées l'une à l'autre par emboîtement,avec articulation,autour d'un axe horizontal 20 parallèle à l'axe 18 de la poulie.Grâce à cet agencement,lors de la pose d'un câble 22 sur une succession de poteaux 23,comme montré figure 6,les parties 17b des bras 17 des consoles extrêmes 2a peuvent pivoter pour se mettre sensiblement dans l'alignement des bissectrices x'-x de l'angle formé,à chaque extrémité de la ligne en cours de pose,par les parties horizontales et inclinées du câble 22.Cela évite que la console 2a correspondante soit soumise à des contraintes de torsion tendant à la déplacer par rapport au poteau et à lui communiquer des efforts anormaux.

7

La forme d'exécution représentée à la figure 8 montre que la console 2 avec son axe amovible 3 peut être utilisée pour recevoir un ensemble de déroulage traditionnel composé d'un flasque 23 porteur d'un axe horizontal 24 pour la poulie 4 et associé à un retour 25 avec linguet 26.Sur ce retour est monté libre en rotation un crochet vertical 27 avec linguet 28.Cette figure met donc en évidence que la console selon l'invention peut être utilisée avec une poulie traditionnelle si l'utilisateur le désire.

On peut également noter que,grâce à sa structure et, notamment,à l'amovibilité des goujons verticaux 8 et 9, l'ensemble formé par la bielle 10 et le mécanisme à cliquet 11 est totalement indépendant de la console proprement dite,ce qui permet à l'utilisateur de choisir le mécanisme qui lui convient,de remplacer ce mécanisme en tant que de besoin et de le disposer,soit à droite,soit à gauche, soit de part et d'autre de la console,lorsqu'elle présente la forme représentée à la figure 5.

Quelle que soit sa forme d'exécution et grâce à sa structure,cette console peut être fixée immédiatement contre n'importe quel poteau sans qu'il soit nécessaire de procéder à plusieurs manipulations,comme c'est le cas avec les consoles actuelles.

8

-REVENDICATIONS-

1-Console pour la suspension temporaire d'un organe de déroulement de câble (4) à un poteau du type comportant une face postérieure d'appui (5) et un lien souple (6) , apte à ceinturer le poteau (14-15) ,et dont au moins l'une des extrémités est engagée dans un mécanisme de tension à cliquet (11) disposé d'un côté de la console (2) et dont l'autre extrémité est apte à coopérer avec un moyen d'ancrage disposé de l'autre côté de la console,caracté-risée en ce qu'elle comprend,d'une part,aux extrémités latérales de sa face d'appui (5),des faces (7) de contact avec le lien souple,d'autre part,deux goujons verticaux amovibles (8-9) disposés symétriquement de part et d'autre et en arrière de sa face d'appui (5),goujons dont au moins l'un (9) constitue organe de guidage du lien souple (6) et axe d'articulation pour un ensemble de tension composé d'une bielle (10) portant,articulé sur elle,le mécanisme à cliquet (11),alors que l'autre constitue,directement ou non,moyens d'ancrage du lien souple (6) et,de plus,dans sa partie antérieure,au moins un goujon vertical de guidage (13) qui,disposé en avant du goujon (9) constituant axe d'articulation pour la bielle (10),forme renvoi pour la partie du lien souple (6) pénétrant dans le mécanisme à cliquet (11) et passant entre l'une des faces de contact (7) et le goujon (9) formant axe d'articulation pour la bielle (10).

2-Console suivant la revendication 1,caractérisée en ce qu'elle ne comporte qu'un goujon de guidage antérieur (13) disposé dans une chape (12) saillant latéralement du corps de la console.

3-Console selon la revendication 1,caractérisée en ce qu'elle comporte,dans sa partie avant et de part et d'autre de son plan médian longitudinal,deux chapes latérales (12) aptes,chacune,à recevoir,séparément ou simultanément,un goujon de guidage (13) pour l'extrémité correspondante du lien souple (6) pénétrant dans un mécanisme à cliquet (11) juxtaposé,lié par l'intermédiaire de sa bielle (10) à l'un ou l'autre des goujons postérieurs (8-9).

4-Console selon la revendication 1 et l'une quelconque des revendications 1 à 3,caractérisée en ce qu'elle comporte,dans sa partie avant,un goujon transversal (3),horizontal et amovible,constituant organe d'accrochage pour tout organe de déroulage d'un câble,portant ou non une poulie (4).

5-Console selon la revendication 4,caractérisée en ce que les moyens portant la poulie (4) sont constitués par un bras (17) dont l'extrémité supérieure est articulée sur le goujon (3) en même temps qu'un linguet de sécurité (19) et dont l'autre extrémité est munie d'un axe sensiblement horizontal (18) saillant vers l'avant et sur lequel la poulie (4) est montée libre en rotation.

6-Console selon la revendication 5,caractérisée en ce que le bras (17) est composé d'une partie supérieure (17a) articulée sur le goujon (3) et d'une partie inférieure (17b) portant la poulie,ces deux parties étant reliées l'une à l'autre par un axe d'articulation (20) parallèle à l'axe (18) pour la poulie.

7-Console selon la revendication 4,caractérisée en ce que les moyens portant la poulie sont constitués par un flasque (23) qui,porteur d'un axe sensiblement horizontal (24) d'articulation de la poulie (4) ,est solidaire d'un retour coudé supérieur (25) muni d'un linguet (26) et traversé par un crochet vertical rotatif (27) apte à s'accrocher sur le goujon transversal (3) de la console.

0088031

FIG_1

FIG_2

FIG_3

FIG_4

FIG.5

FIG.6

FIG. 7

FIG. 8